# EUROPEAN PATENT APPLICATION

(11) **EP 2 138 772 A2**
(43) Date of publication of application: **30.12.2009**
(21) Application number: 09163466.7
(22) Date of filing: 23.06.2009
(51) Int. Cl.: F24D 3/10, F24D 3/16, F24D 19/10

(54) **Heating device, particularly for gazebo structures, patios, forecourts and the like**

(30) Priority: 27.06.2008 IT VR20080074
(71) Applicant: Cerin, Bruno, 36100 Vicenza (IT)
(72) Inventor: Cerin, Bruno, 36100 Vicenza (IT)
(74) Representative: Modiano, Micaela Nadia

(57) **Abstract**

A heating device (1) particularly for gazebo structures, patios, forecourts and the like, comprising at least two self-supporting heating modules (2) which can be associated detachably with the ground in order to provide part of the flooring (3) of the space to be heated, each heating module (2) having a heating panel (4), which is designed to be directed toward the walkable surface of the floor and is associated with at least one coil (5) that has an inlet (5a) and an outlet (5b) which can be connected to a duct (6) for the distribution of the heating fluid generated by heating fluid generator means (7), characterized in that the heating fluid distribution duct (6) comprises at least one first distribution circuit (6a) and at least one second distribution circuit (6b), which are designed to send/receive the heating fluid toward and from a respective heating module (2) or toward and from a respective group of heating modules (8).

## Description

The present invention relates to a heating device particularly for gazebo structures, patios, forecourts and the like.

Currently it is a rather strongly felt need to heat, especially in the winter period, pavilions or gazebos or forecourts used usually for activities such as restoration, bars or also for exhibition spaces.

In the winter period, these spaces are generally equipped with heating devices, such as overhead infrared devices or so-called mushroom heaters or warm air blowers.

Although these devices are widely used, they have drawbacks; among these, perhaps the most important is that they concentrate the heat radiation in a very limited region, making it consequently impossible in practice to achieve adequate uniformity of the temperature inside.

Another heating method, which however is used to heat enclosed spaces, is the one that uses pipes, to be arranged between the floor slab and the flooring and designed to be crossed by a transfer fluid (typically hot water) which is circulated by a boiler.

Generally, each space to be heated is crossed by a single coil or, if a plurality of coils are used, they are connected in series, i.e., the outlet of one coil is connected to the inlet of the next coil and so forth.

The connection "in series" among the various coils on the one hand simplifies assembly operations but on the other hand makes it impossible to provide regions with different heating capacities within the same space.

Further, it is evident that the coil portions that are closest to the boiler are crossed by the transfer fluid at a higher temperature than the more distant portions, and this causes a certain lack of uniformity in the heating of the space.

Finally, this solution, in addition to being particularly laborious from the procedural standpoint, is also expensive, and accordingly is not feasible for heating spaces such as gazebos, terraces, exhibition spaces and the like.

The aim of the present invention is to provide a heating device particularly for gazebo structures, patios, forecourts and the like that is capable of eliminating, or at least of reducing drastically, the above-mentioned drawbacks which presently can be observed in currently commercially available devices.

Within this aim, an object of the invention is to provide a heating device particularly for gazebo structures, patios, forecourts and the like that allows a differentiation of the degree of heating of the various regions.

Another object of the invention is to provide a heating device particularly for gazebo structures, patios, forecourts and the like that is capable of ensuring high practicality in use and transport.

Another object of the invention is to provide a heating device particularly for gazebo structures, patios, forecourts and the like that has an extremely competitive production cost, so that its use is advantageous also from the economic standpoint.

This aim and these and other objects, which will become better apparent hereinafter, are achieved by a heating device particularly for gazebo structures, patios, forecourts and the like, comprising at least two self-supporting heating modules which can be associated detachably with the ground in order to provide part of the flooring of the space to be heated, each heating module having a heating panel, which is designed to be directed toward the walkable surface of said floor and is associated with at least one coil that has an inlet and an outlet which can be connected to a duct for the distribution of the heating fluid generated by said heating fluid generator means, **characterized in that** the heating fluid distribution duct comprises at least one first distribution circuit and at least one second distribution circuit, which are designed to send/receive said heating fluid toward and from a respective heating module or toward and from a respective group of heating modules.

Further characteristics and advantages of the invention will become better apparent from the following detailed description of some preferred but not exclusive embodiments of a heating device according to the present invention, illustrated by way of non-limiting example in the accompanying drawings, wherein:
Figure 1 is a schematic perspective view of an embodiment of a heating device according to the invention;

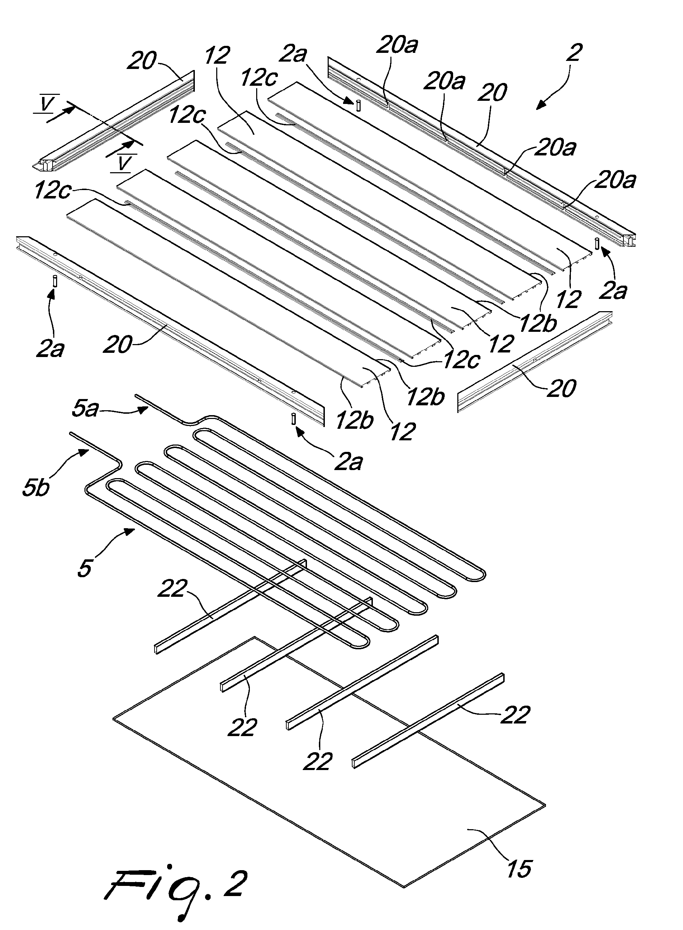

Figure 2 is an exploded perspective view of a heating module;

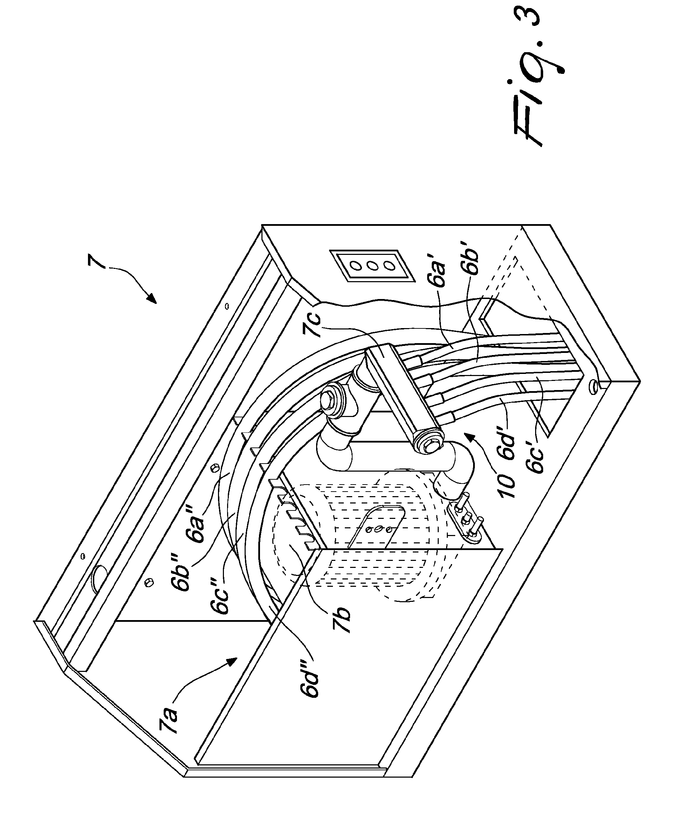

Figure 3 is another perspective view of an alternative embodiment of heating fluid generator means;
Figure 4 is a side elevation view of a heating panel;
Figure 5 is a transverse sectional view, taken along the line V-V of Figure 2 of the supporting frame;
Figure 6 is an enlarged-scale sectional view of a portion of the heating panel associated with a coil;
Figure 7 is a further enlarged-scale view of a portion of what is shown in Figure 6;
Figure 8 is a cutout perspective view of the heating module;
Figure 9 is a bottom perspective view of the heating module, in which the supporting panel has been omitted for the sake of greater clarity.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, a heating device particularly for gazebo structures, patios, forecourts and the like, generally designated by the reference numeral 1, comprises at least two self-supporting heating modules 2, which can be associated detachably, for example by means of adjustable feet 2a, with the ground in order to provide part of a flooring 3 of the space to be heated.

Each heating module 2 has a heating panel 4, which is designed to be directed toward the walkable surface of the flooring 3.

The heating panel 4 is further associated with at least one coil 5, which has an inlet 5a and an outlet 5b, which can be connected, for example by means of pipes and corresponding connecting portions, to a duct 6 for the distribution of the heating fluid generated by generator means 7.

According to the present invention, the distribution duct 6 of the heating fluid comprises at least one first distribution circuit 6a and at least one second distribution circuit 6b, each of which is designed to send/receive the heating fluid toward and from the respective heating module 2 or toward and from a respective group of heating modules 8.

With particular reference to the embodiment shown in the figures, each group of heating modules 8 comprises at least two heating modules 2, which can be mutually advantageously connected in parallel.

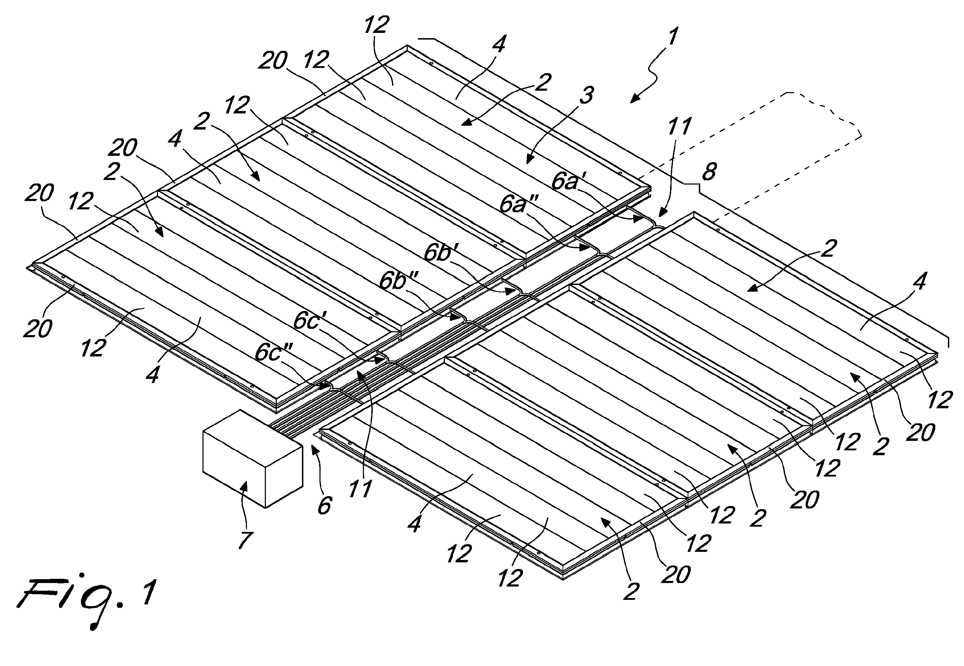

In practice, as shown schematically in the perspective view of Figure 1, each distribution circuit 6a, 6b, etc. comprises a delivery line 6a', 6b', etc. and a return line 6a", 6b", etc., which have, at their end that lies opposite with respect to the one that leads into the generator means 7, a respective distribution manifold, which is designed to carry and receive the transfer fluid toward each inlet 5a and from each outlet 5b of the group of modules 8.

It is evident that this embodiment allows to ensure a controlled and constant temperature in any region that lies above each group of modules 8.

In any case, independently of the method of connection between the inlet 5a and the outlet 5b of the heating modules 2 of each group of heating modules 8, they are connected to the same distribution circuit 6a, 6b, etc.

By way of example, the heating fluid generator means 7 comprise a boiler 7a, which is associated with a distribution pump 7b that is designed to send the heating fluid through the distribution duct 6.

In particular, each return line 6a", 6b", etc. leads freely into the boiler 7a, while each delivery line 6a', 6b', etc. is connected independently to a delivery manifold 7c.

The delivery manifold 7c in turn draws the heated water from inside the boiler 7a, while the distribution pump 7b is interposed between the boiler 7a and the delivery manifold 7c to ensure that the transfer fluid that passes through the distribution duct 6 has a pressure that is sufficient to pass through the respective coils 5.

Advantageously, the distribution duct 6 is associated with control means 10, which are designed to allow to send the heating fluid to at least one of the distribution circuits 6a, 6b, etc.

Conveniently, the control means 10 are adapted to adjust independently, for example by means of thermal valves, the temperature that is sent, through each distribution circuit 6a, 6b, etc., to the respective heating module 2 or to the respective group of heating modules 8.

Nothing prevents, however, controlling the temperature of the heating modules 2 or of the groups of heating modules 8 by providing differentiated feed times for each distribution circuit 6a, 6b, etc.

It has been found that it is particularly advantageous for each heating module 2 to form a respective technical compartment 11 for the placement of the delivery lines 6a', 6b', etc. and the return lines 6a", 6b", etc. that form the distribution circuits 6a, 6b, etc.

According to a preferred embodiment (shown in Figure 1), the technical compartment 11 comprises a channel that is formed between two heating modules 2 arranged side by side.

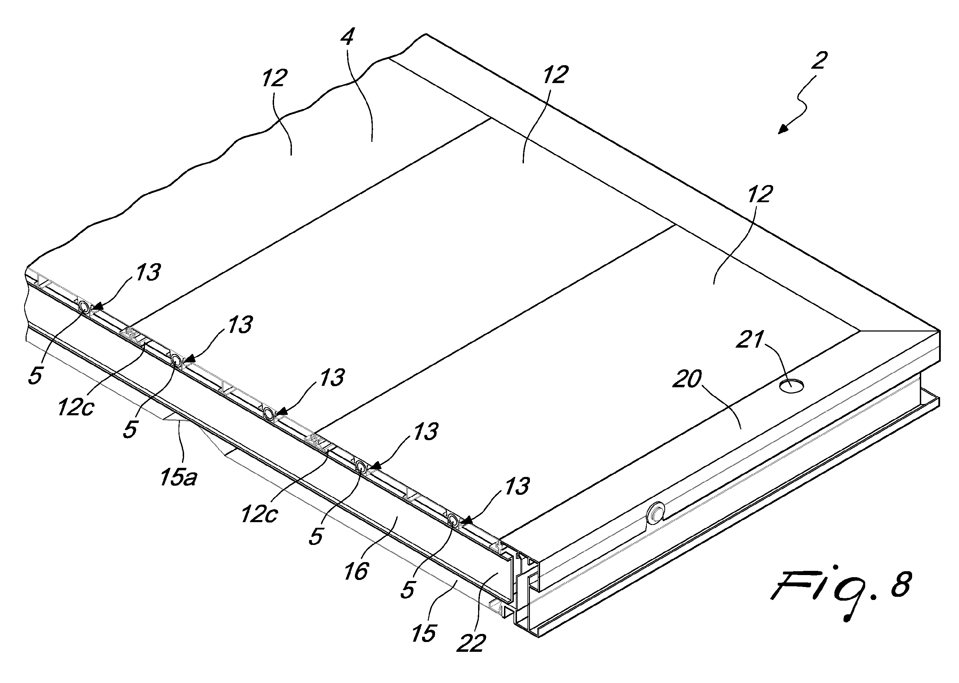

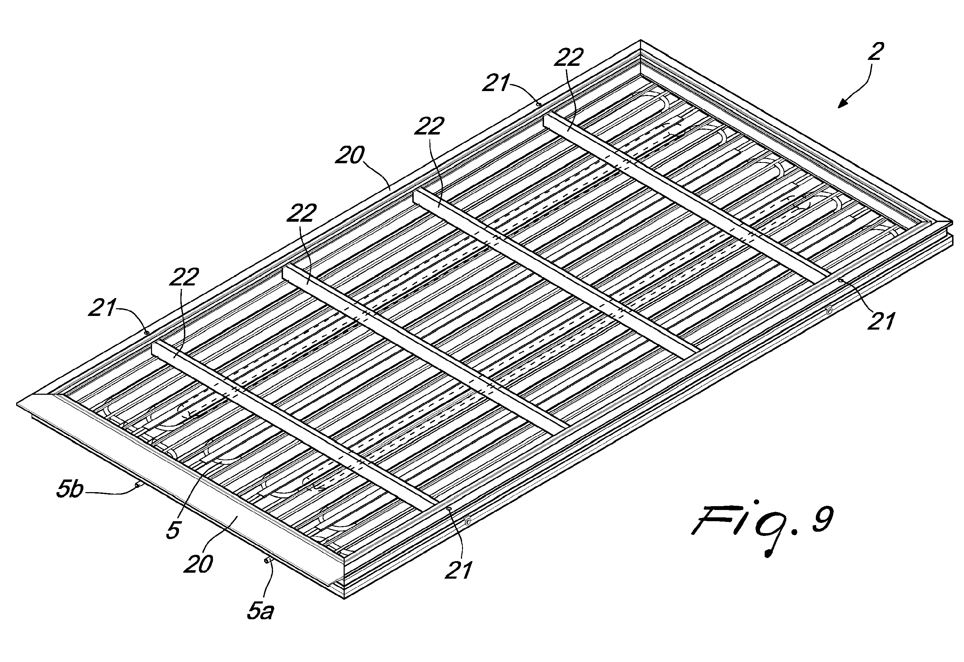

Conveniently, as shown clearly in Figures 8 and 9, the heating modules 2 are provided by a supporting frame 20, with which it is possible to associate the adjustable feet 2a. For example, it is possible to provide, at right angles to the plane of arrangement of the heating module 2, on the supporting frame 20, threaded holes 21 that can be engaged by a respective threaded stem that forms part of the adjustable foot 2a.

This allows to adjust simply and reliably the height of the individual adjustable feet 2a in order to ensure that the heating modules 2 can lie on perfectly horizontal planes.

With reference to a further particularly important aspect of the present invention, the heating panel 4 can be constituted by a profile 12, which has, at a face 12a that lies opposite the walking surface, at least one track-like portion 13 that is shaped like an inverted letter U and forms a receptacle 14 for a respective longitudinal portion of the coil 5.

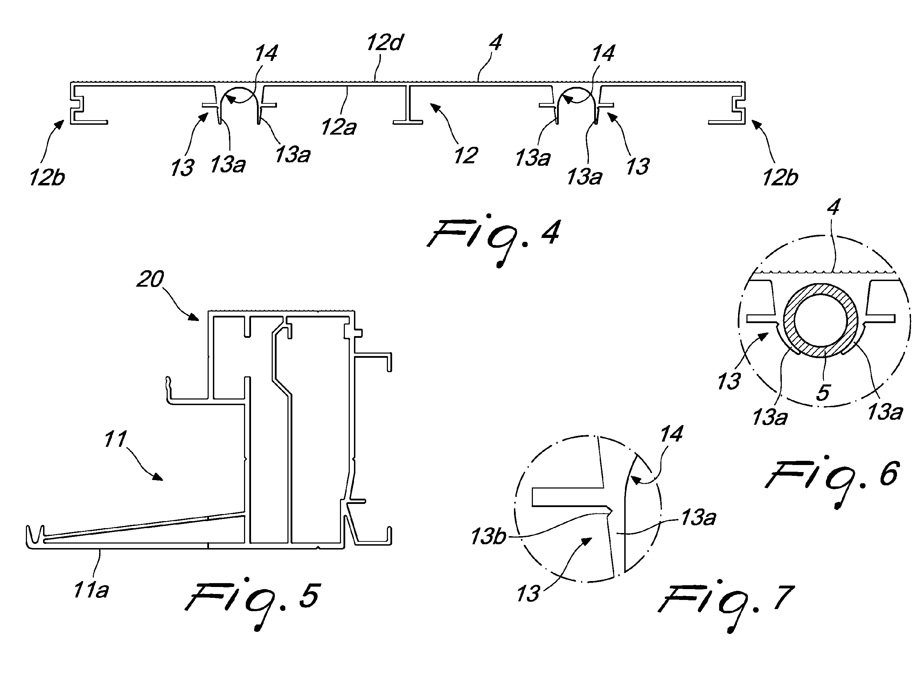

In particular, as shown in Figures 6 and 7, the end portions 13a of the U-shaped rail 13 can be deformed plastically, as a consequence of a manual or automated intervention during production, in order to keep the coil 5 within the receptacle 14 and in contact with the opposite face 12a of the heating panel 4.

The embodiment described above allows to achieve two goals: the first one is to ensure perfect adhesion of the coil 5 to the internal face 12a of the heating panel 4 without the need to perform expensive welding and/or adhesive bonding, and the second one is related to a significant increase in the heat exchange surface that is capable of transmitting heat from the coil 5 to the heating panel 4.

In order to facilitate the plastic deformation of the end portions 13a of the U-shaped rail 13, it is possible to provide longitudinal notches 13b that are formed on the U-shaped rail 13 and lie radially with respect to the coil 5.

In particular, the heating panel 4 can be constituted by a plurality of profiles 12, which lie along a respective longitudinal direction and can be mutually mated at their longitudinal edges 12b; with reference to the embodiment shown in the figures, the mutual mating can occur by way of the use of locking profiles 12c, which form internally a mutual locking seat that can be engaged by the longitudinal edges 12b and be shaped complementarily with respect to them.

This ensures the possibility to provide by extrusion the profiles 12 (limiting their transverse dimension), thus providing simply and effectively the rails 13 designed to lock the longitudinal portions of the coils 5.

A face 12d of the profiles 12 that lies opposite the internal face 12a can be made rough, so as to form, if necessary, a walking surface that has anti-slip properties.

Advantageously, the heating modules 2 are provided with a supporting panel 15, which is arranged parallel to the heating panel 4 and on the opposite side with respect to the heating panel 4 relative to the coil 5.

In particular, a layer of expanded material 16 is provided between the coil 5 and the supporting panel 15.

Advantageously, it is possible to use closed-cell polyurethane foam that ensures at the same time high thermal insulation but also a certain mechanical strength.

The supporting panel 15 is conveniently shaped so as to form one or more reinforcement ribs 15a.

In order to ensure a greater structural strength of the heating module 2, it is possible to provide stiffening cross-members 22, which lie between the coil 5 and the supporting panel 15 and can be connected, at their ends 22a, to respective engagement portions 20a formed on the supporting frame 20.

It has been found that it is particularly advantageous to provide the possibility to adjust, by way of adjustment means, the vertical position of the heating panel 4 (and in particular of the profile or profiles 12) along the vertical extension of the supporting frame 20, so as to allow the positioning of any finishing panels that form the walking surface.

The operation of a heating device particularly for gazebo structures, patios, forecourts and the like according to the present invention is evident from what has been described above.

All the characteristics of the invention indicated above as advantageous, convenient or the like may also be omitted or be replaced with equivalents.

The invention thus conceived is susceptible of numerous modifications and variations, all of which are within the scope of the appended claims.

In practice it has been found that the invention has achieved the intended aim and objects in all of its embodiments.

In practice, the materials used, as well as the dimensions, may be any according to requirements.

All the details may further be replaced with other technically equivalent elements.

The disclosures in Italian Patent Application No. VR2008A000074 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A heating device particularly for gazebo structures, patios, forecourts and the like, comprising at least two self-supporting heating modules which can be associated detachably with the ground in order to provide part of the flooring of the space to be heated, each heating module having a heating panel, which is designed to be directed toward the walkable surface of said floor and is associated with at least one coil that has an inlet and outlet which can be connected to a duct for the distribution of the heating fluid generated by heating fluid generator means, **characterized in that** said heating fluid distribution duct comprises at least one first distribution circuit and at least one second distribution circuit, which are designed to send/receive said heating fluid toward and from a respective heating module or toward and from a respective group of heating modules.

2. The heating device according to claim 1, **characterized in that** said group of heating modules comprises at least two heating modules.

3. The heating device according to one or more of the preceding claims, **characterized in that** said heating fluid generator means comprise a boiler that is associated with a distribution pump that is designed to send said heating fluid through said distribution duct.

4. The heating device according to one or more of the preceding claims, **characterized in that** said distribution duct is associated with control means that are designed to allow to send said heating fluid to at least one of said distribution circuits.

5. The heating device according to one or more of the preceding claims, **characterized in that** said control means are adapted to adjust independently the temperature that is sent, through each distribution circuit, to the respective heating module or to the respective group of heating modules.

6. The heating device according to one or more of the preceding claims, **characterized in that** said heating module has a respective technical compartment for the placement of feed and return lines that form said distribution circuits.

7. The heating device according to one or more of the preceding claims, **characterized in that** said respective technical compartment comprises a channel that is formed between two laterally adjacent heating modules.

8. The heating device according to one or more of the preceding claims, **characterized in that** said heating module comprises a supporting frame that is associable with said adjustable feet.

9. The heating device according to one or more of the preceding claims, **characterized in that** said heating panel has a profile that has, at the face that lies opposite said walking surface, at least one U-shaped rail that forms a receptacle for a respective portion of said coil, the end portion of said U-shaped rail being plastically deformable in order to keep said coil within said receptacle and in contact with said opposite face of said heating panel.

10. The heating device according to one or more of the preceding claims, **characterized in that** it comprises at least one longitudinal notch that is formed on said U-shaped rail and is extended radially with respect to said coil.

11. The heating device according to one or more of the preceding claims, **characterized in that** said heating module has a supporting panel that is arranged parallel to said heating panel and on the opposite side of said coil with respect to said heating panel, between said coil and said supporting panel there being a layer of expanded material.

12. The heating device according to one or more of the preceding claims, **characterized in that** said heating panel comprises at least two profiles, which lie along a respective longitudinal direction and can be mated mutually at their longitudinal edges.

13. The heating device according to one or more of the preceding claims, **characterized in that** it comprises at least one stiffening cross-member which lies between said coil and said supporting panel and can be connected, at its ends, to respective engagement portions formed on said supporting frame.

14. The heating device according to one or more of the preceding claims, **characterized in that** it comprises means for adjusting the position of said heating panel along the vertical extension of said supporting frame.
